# EUROPEAN PATENT APPLICATION

(11) **EP 2 869 055 A1**
(43) Date of publication of application: **06.05.2015**
(21) Application number: 13191555.5
(22) Date of filing: 05.11.2013
(51) Int. Cl.: G01N 15/02, G02B 3/00

(54) **Improvements relating to particle characterisation**

(71) Applicant: Malvern Instruments Limited, Malvern, Worcestershire WR14 1XZ (GB)
(72) Inventor: Spriggs, David, Malvern, Worcestershire WR14 1XZ (GB)
(74) Representative: Lawrence, John

(57) **Abstract**

A particle characterisation apparatus (40) is provided comprising: a light source (2); an optical group (92); and a detector (44b). The light source (2) is operable to illuminate a sample (22) within the sample cell (30) with a light beam (8) along a light beam axis. The light beam axis passes through the sample cell (30), and the sample therein, thereby producing scattered light by interactions with the sample. The optical group (92) is configured to collect and focus scattered light on the detector, and comprises at least one lens element (94, 96, 99a, 99b). At least one lens element (94, 95) of the optical group 92 comprises an open region along the lens element axis, and is positioned with its axis substantially coincident with the light beam axis so that the light beam passes through the open region

## Description

The present invention relates to an apparatus for characterising particles, and to a method for use in characterising particles. Characterising particles may comprise determining a distribution of particle size.

It is known that particles in a sample can be characterised by illuminating the sample and measuring the light scattered by the particles. The particles of the sample are typically dispersed within a sample cell in a dispersant medium during measuring. The dispersant medium is typically air or water, and typically flows through the sample cell during measurement.

In this type of instrument the sample cell conventionally has a pair of flat, parallel transparent walls, and the sample is illuminated through a first wall. Forward scattered light leaves the sample cell via the opposite second wall, and backscattered light leaves the sample cell via the first wall. This arrangement is suitable for measuring both the relatively low scattering angles associated with large particles and the higher scattering angles associated with small particles.

In a different type of instrument the sample is illuminated with a light beam that is parallel to the walls of the sample cell, and light scattered sideways through the walls of the sample cell is detected. Such instruments are referred to as multi angle light scattering (MALS) instruments, and are typically used for measuring molecular weight and the size of very small particles in a liquid, such as macromolecules. MALS instruments are not suitable for characterising a broad range of particle sizes, in particular for characterising larger particles. US 2011/0242535 discloses a MALS instrument in which a wall of the measurement cell comprises a curved surface. A light absorbing device, such as a light absorbing coating is preferably installed on the wall opposite to the curved side of the sample cell.

EP 0485817 discloses an apparatus for measuring particle size distribution wherein the sample cell comprises a wall that is parallel to the axis of a light beam illuminating the sample, and a further wall at 45 degrees to the axis of the light beam.

The correlation between light scattering and particle characteristics can be described by the well known Mie solution to Maxwell's equations. Smaller particles tend to result in larger scattering angles, and larger particles result in smaller scattering angles. The light scattered at each of a range of angles from the sample can be used to determine, for example, a size distribution of the particles in the sample.

One problem with existing systems for particle characterisation by light scattering is signal to noise ratio. When small amounts of scattered light must be detected in order to characterise the particles, electronic noise or optical noise may make reliable measurements difficult to achieve. Optical noise may arise from a number of sources, including bubbles, detritus on the various optical elements, leaching of chemicals into the sample, dispersant index gradients and errors in background subtraction.

Where the dispersant is water, a further problem tends to arise in prior art particle characterisation systems. The angle of light scattered at an initial scattering angle in water will increase on refraction at the interface between the sample cell and air, which tends to decrease the intensity of scattered light per steradian for detection. Furthermore, light scattered above a critical angle will be totally internally reflected at the interface between the sample cell and air. This reflected light will end up as a weak haze of light that tends to contaminate the scattered light, contributing to optical noise.

It is an object of the invention to overcome or least ameliorate one or more of the above mentioned problems.

According to a first aspect of the invention, there is provided a particle characterisation apparatus comprising: a light source; a sample cell; and a detector; wherein the light source is operable to illuminate a sample comprising dispersed particles within the sample cell with a light beam along a light beam axis, the light beam axis passing through a first wall of the sample cell, through the sample, and through a second wall of the sample cell, so as to produce scattered light by interactions with the sample; wherein the detector is configured to detect scattered light leaving the sample cell; and wherein the first wall and/or second wall of the sample cell comprise a convex external surface through which the light beam axis passes.

Particle characterisation may comprise determining a distribution of particle sizes.

The scattered light may leave the sample cell via the first wall and/or the second wall. The scattered light may leave via the convex external surface of the first wall and/or second wall. Scattered light leaving the sample cell via the second wall may be forward scattered light. Scattered light leaving the sample cell via the first wall may be backward scattered light.

Preferably, the external surface of at least the second wall is convex. Curving the external surface of the second wall allows light to escape from the sample cell that would otherwise have been totally internally reflected at the sample cell/air interface. Curving the external surface of either the first wall or the second wall enables the first or second wall of the sample cell to act as a lens. A sample cell with a first wall having a curved external surface can be used to eliminate a lens element or lens group that may otherwise have been necessary between the light source and the sample. A sample cell with a curved external surface can be used to compensate for increases in scattering angle caused by refraction of light at the sample cell/air interface (this applies equally to forward and backscattered light).

A convex external surface on a wall of the sample cell can be used to substantially prevent total internal reflection at high scattering angles. This increases the light intensity per steradian, thereby increasing the signal at the detector, and reducing one of the sources of optical noise. The signal to noise ratio of the apparatus is thereby considerably improved. One of the technical effects of preventing total internal reflection at high scattering angles is to enable the detection of bubbles in liquid dispersions by allowing detection of the relatively intense scattering at high scattering angles due to total internal reflection at the liquid/bubble interface.

A sample cell in which the second wall has a curved external surface can be configured to reduce the divergence of a beam exiting the sample cell. Among other things, this allows an increased intensity of illumination of the sample by allowing a fixed diameter of illumination within the cell to be illuminated from a broader range of angles without an associated penalty in the size of the associated collection optic. Curving the external surface of the sample cell can eliminate corners over a broad range of angles of incidence. This enables a large number of light sources and detectors to be arrayed around the device, and facilitates analysis using a wide range of optical techniques in a single instrument.

The first wall and/or second wall may comprise a lens. The lens may be a doublet lens. A doublet lens can be configured to have reduced spherical aberration compared to a single simple lens element. The doublet lens may comprise a meniscus lens element bonded to a plano-convex lens element.

The second wall may be configured to allow light scattered from the sample at scattering angles of 10 degrees or less to at least 50 degrees to the incident light beam (and preferably 5 degrees to at least 80 degrees) to escape from the external surface of the second wall of the sample cell without total internal reflection at the external surface of the second wall, when the sample comprises particles in a water dispersant. Increasing the range of scattering angles that can escape from the sample cell improves the ability of the apparatus to characterise smaller samples.

The first wall of the sample cell may be configured to collimate the light beam passing through the sample. This so called Fourier configuration provides unique transposition between the scattering angle to a detector location. Using the first wall of the sample cell as a collimating lens removes the need for a collimating lens external to the sample cell, and reduces the size of the instrument.

The first wall may be configured focus the light beam within the sample and/or to form the light beam into a narrow beam within the sample, wherein the narrow beam has a maximum 1/e² width that is less than half the distance across the interior of the sample cell along the light beam axis.

The first wall and/or the second wall of the sample cell may comprise a substantially planar internal surface opposite the respective convex external surface.

The first and second wall may have substantially planar internal surfaces that are substantially mutually parallel.

The sample cell may be configured such that the first wall and second wall are separable, so that the internal surfaces of the sample cell can be cleaned.

The detector may be configured to detect scattered light leaving the sample cell via the first wall of the sample cell or the second wall of the sample cell. A further detector may be provided, configured to detect scattered light leaving the sample cell via the other wall of the sample cell.

Light scattered in a direction having a component in the direction of propagation of the light beam may be termed forward scattered light. Light scattered in a direction having a component in the direction opposite to the direction of propagation of the light beam may be termed back scattered light.

The first and/or second wall of the sample cell may be configured to focus scattered light on the detector. The first and/or second wall of the sample cell may be configured to focus scattered light on the detector without an intermediary collecting lens.

The apparatus may comprise a collecting lens element that is arranged to collect and focus scattered light onto the detector. The lens element may have an axis that is substantially co-incident with the light beam axis. The collecting lens element may be configured to allow the light beam to bypass the collecting lens element.

The collecting lens element may be substantially sector shaped, when viewed along the lens element axis. The term substantially sector shaped, as used herein (in each and every aspect of the invention), includes a circular sector and an annular sector, and encompasses any shape with an arc shaped outer edge between two substantially radial edges

The apparatus may comprise a further detector; wherein the further detector is arranged to detect light scattered at a first range of scattering angles, and the collecting lens element is configured to collect and focus scattered light scattered at a second range of scattering angles onto the detector, wherein the second range of scattering angles is different from the first range, and wherein the plane of each of the detector and further detector is substantially normal to the light beam axis.

Each of the detector and the further detector may be arranged to detect forward scattered light.

The detector may be positioned closer to the sample cell than the further detector.

The apparatus may comprise a first optical group configured to collimate the light beam, and a second optical group configured to direct forward scattered light towards the detector, wherein the detector is planar, the forward scattered light comprising a light scattered by interactions with the sample at a range of scattering angles and passing through the second wall. The forward scattered light is preferably collected and focused by the second optical group at the plane of the detector.

The optical power of the first and second wall may be substantially identical. The optical power of the first and second wall may be different. The optical power of the first wall may be less than the optical power of the second wall, which may be appropriate for collimating a light source with a low numerical aperture (such as a spatially filtered HeNe laser). A first wall with a relatively high positive optical power may be used to collimate a light source with a high numerical aperture. Such an arrangement conveniently facilitates the use of a relatively low cost, high power diode laser.

The apparatus may comprise a first optical group configured to direct the light beam into the sample, and a second optical group configured to collect and focus forward scattered light at the detector, wherein the detector is planar, and the forward scattered light comprises light scattered by interactions with the sample at a range of scattering angles and passing through the second wall. Configuring the apparatus so that a planar detector can be used to detect light scattered at a relatively broad range of angles facilitates a low cost design, by eliminating the need for a plurality of individually aligned detectors, each with their own optical element(s) and electrical connections.

The first optical group may comprise the first wall of the sample cell, and/or the second optical group may comprise the second wall of the sample cell. This saves cost and volume by eliminating the need for additional optical elements between the light source and sample and the sample and detector respectively.

The apparatus may further comprise a further detector configured to detect backscattered light, the backscattered light comprising light scattered by interactions with the sample at a range of scattering angles and passing through the first wall, wherein the further detector is planar, and the further detector and first optical group are configured such that backscattered light at a range of scattering angles is aggregated and focused by the first optical group at the further detector.

The second optical group may be configured to direct the forward scattered light so that it is substantially normally incident with the detector and/or the first optical group is configured to direct the back scattered light so that it is substantially normally incident with the further detector. Directing the light normal to the detector or further detector maximises the light intensity for a given unit area of the detector, maximising the signal to noise ratio.

The range of scattering angles for the forward scattered light and/or backscattered light may be at least 45 degrees. The range of scattering angles is preferably selected from the group of: at least 30 degrees, at least 45 degrees, at least 60 degrees, and at least 80 degrees.

The detector and/or further detector may be configured to receive scattered light at the range of scattering angles over an azimuthal range of at least 180 degrees. The range of azimuthal angles is preferably selected from the group of: at least 180 degrees, at least 270 degrees, at least 330 degrees and substantially 360 degrees. The increase in the range of azimuthal light collected increases the total signal, thereby increasing the signal to noise ratio.

The detector and/or further detector may comprise a monolithic focal plane array including a plurality of light detectors. The focal plane array may include a substantially sector shaped portion, which may be segmented into a plurality of annular detectors. This avoids the need for electrically connecting and aligning a plurality of detectors on a substrate. Furthermore, a monolithically integrated array of detectors can be provided with a smaller detector pitch, and can include integrated readout electronics and processing to minimise electronic noise. It is more straightforward to include such functionality on a relatively large array. Parasitic capacitance and inductance from electrical interconnections is also reduced, tending to improve the signal quality by reducing electrical noise.

The first and second optical group may be substantially symmetric about the centre of the sample. The first and/or second optical group may be rotationally symmetric about the light beam axis. The first and second optical group may have mirror symmetry about a line or plane passing through the centre of the sample. The line may be orthogonal to the light beam axis. This provides an elegant optical solution which can easily be scaled. A symmetric arrangement is particularly suitable for directing a collimated light beam through the sample.

The first and/or second optical group may consist of four elements. Each element of the first and/or second optical group may comprise a plano-convex element. This has been found to be a particularly suitable arrangement that balances size, performance and cost.

The detector may be disposed adjacent to and parallel with a planar face of an element of the second optical group. The use of a lens element with a planar face adjacent to the detector means that it is straightforward to align and position the detector with respect to the optical element, for instance by offsetting it from adjacent lens element using spacers.

The apparatus may be operable to employ a plurality of different optical measurement techniques, each optical measurement technique having its own respective light source and optical path for illuminating the sample. This may be particularly useful for a high value, small volume sample, where it is desirable to carry out a number of experiments in a short time.

According to a second aspect of the invention, there is provided a sample cell for use in an apparatus according the first aspect of the invention, the sample cell having at least one curved external wall.

According to a third aspect of the invention, there is provided a method of distinguishing between bubbles and particles in a sample comprising a liquid, comprising illuminating the sample with a light beam along a light beam axis, detecting light scattered by the sample at a range of scattering angles, and distinguishing bubbles from particles in the sample by detecting the stronger scattering from bubbles due to reflections therefrom at a range of scattering angles of more than a predetermined angle from the light beam axis; wherein the predetermined angle is at least 35 degrees.

Distinguishing bubbles from particles may comprise comparing a ratio of forward scattered light to backscattered light, wherein the forward scattered light has a scattering angle of at least the predetermined angle. Ratios above a predetermined size may indicate that bubbles are present in the sample. Bubbles may be detected if the ratio is greater than a 5, 10, 15 or 20.

The ratio of forward scattered light to back scattered light may be determined with reference to forward scattered light at scattering angles of between 40° and 60° from the light beam axis.

The predetermined angle may be selected from the group of: 40°, 50°, 60°, 70° and 80°.

The sample may comprise particles dispersed in water.

The light beam axis may pass through a first wall of the sample cell, through the sample, and through a second wall of the sample cell; wherein the first wall and/or second wall of the sample cell comprise a convex external surface through which the light beam axis passes.

The sample cell may comprise a planar external surface with a surface normal at an angle of at least 15° to the light beam axis, the planar external surface being arranged to allow light scattered at high angles to escape and be detected by the detector without total internal reflection at the external surface.

According to a fourth aspect of the invention, there is provided apparatus for distinguishing between bubbles and particles in a sample comprising a liquid, comprising means for illuminating the sample with a light beam along a light beam axis, and means for detecting light scattered by the sample at a range of scattering angles, and means for distinguishing bubbles from particles in the sample by detecting stronger scattering from bubbles due to reflections therefrom at a range of scattering angles of more than a predetermined angle from the light beam axis.

According to a fifth aspect of the invention, there is provided a particle characterisation apparatus comprising: a light source; a sample cell; a detector; and a processor; wherein the light source is operable to illuminate a sample comprising particles dispersed in a liquid within the sample cell with a light beam along a light beam axis, the light beam axis passing through the sample cell and the sample therein, so as to produce scattered light by interactions with the sample; wherein the detector is configured to detect scattered light leaving the sample cell at angles of at least a predetermined angle from the light beam axis; and the processor is configured to distinguish bubbles from particles in the sample by the stronger scattering from bubbles due to reflections therefrom at angles of more than the predetermined angle from the light beam axis; wherein the predetermined angle is at least 35 degrees.

The particle characterisation apparatus (40) of claim 8, wherein the processor is configured to distinguish bubbles from particles by determining a ratio of forward scattered light to back scattered light, wherein the forward scattering light has a scattering angle of at least the predetermined angle.

The processor may be configured to detect bubbles in the sample if the ratio is greater than 10 or 20.

The processor may be configured to determine the ratio of forward scattered light to back scattered light with reference to forward scattered light at scattering angles of between 40° and 60°.

The predetermined angle may be selected from the group of: 40°, 50°, 60°, 70° and 80°.

The sample may comprise particles dispersed in water.

The light beam axis may pass through a first wall of the sample cell, through the sample, and through a second wall of the sample cell; wherein the first wall and/or second wall of the sample cell comprise a convex external surface through which the light beam axis passes.

The sample cell may comprise a planar external surface with a surface normal at an angle of at least 15° to the light beam axis, the planar external surface being arranged to allow light scattered at high angles to escape and be detected by the detector without total internal reflection at the external surface.

The method of the second aspect of the invention may comprise using the apparatus according to the third or fourth aspect to distinguish bubbles from particles by detecting scattering therefrom.

According to another aspect of the invention, there is provided a computer readable medium, comprising software which is operable to identify bubbles in a liquid sample by determining a ratio of forward scattered light at scattering angles above a predetermined angle to back scattered light, wherein the predetermined angle is at least 35 degrees, and wherein bubbles are identified if the ratio is greater than 10.

According to a sixth aspect of the invention, there is provided a particle characterisation apparatus comprising: a light source; a sample cell; an optical group; and a detector; wherein the light source is operable to illuminate a sample within the sample cell with a light beam along a light beam axis, the light beam producing scattered light by interactions with the sample; wherein the optical group is configured to collect and focus scattered light on the detector, and comprises at least one lens element; wherein a lens element of the optical group comprises an open region along the lens element axis, and the lens element is positioned with its axis substantially coincident with the light beam axis so that the light beam passes through the open region.

This arrangement reduces stray light within the apparatus as a result of reflection of the light beam from the surfaces of the lens element. The light beam is typically many orders of magnitude more powerful than the scattered light from the sample, and reflection of even a small proportion of the light beam can result in considerable stray light, which results in optical noise that tends to mask scattered light from detection. The use of a lens element that is configured to allow the light beam to pass by or through it without reflection may substantially reduce optical noise. This may substantially improve the performance of optical configurations in which collecting lenses are on the axis of the light beam that would otherwise have resulted in the signal of the scattered light being swamped by reflections from the collection optics.

The lens element may be formed from circular lens element with a central through hole co-incident with the axis of the lens.

The lens element may be substantially sector shaped when viewed along the lens element axis. The shape of the lens may correspond with a region of a circular lens element that corresponds with a part of a sector of the circular lens element when the circular lens element is viewed along the axis of the circular lens element. The sector shaped lens element may comprise a first face formed by cutting a circular parent lens along a first radius, and a second face formed by cutting a circular parent lens along a second radius.

The use of a sector shaped lens may provide for substantial economy in the production of collection lenses, wherein a single circular parent lens may be cut into a plurality of segment shaped lenses. Furthermore, the use of sector shaped lenses allows lenses positioned on the axis of the light beam to provide a plurality of differently configured optical paths for light scattered at different azimuthal scattering angles.

The sector shaped lens element may be formed from a circular lens element by cutting the circular lens element along a first and second radius.

The lens element may comprise an aspheric surface. It has been found that the use of aspheric surfaces considerably reduce the optical path length necessary to achieve acceptable performance.

The optical group may be configured to direct and focus forward light scattered at angles of at least 35 degrees to the light beam axis, preferably at angles of a least 50 degrees to the light beam axis.

The optical group may comprise a plurality of lens elements.

At least two lens elements of the optical group may comprise lens elements with an open region along their axis.

The optical group may comprise at least one substantially circular lens that does not include an open region along its axis. Regions of the optical path that are remote from the sample cell may need to collect a relatively diverged beam, and the use of a circular lens may therefore be more appropriate than a segment shaped lens.

The apparatus may comprise a further detector, wherein the detector is configured to detect light scattered at a first range of angles to the light beam axis, and the further detector is configured to detect light scattered at a second range of angles to the light beam axis, wherein the first range is broader than the second range, and wherein the first range includes higher maximum scattering angle than the second range.

The optical group may be configured to produce an image spot on the detector with a radial extent that is less than half of a tangential extent of the image spot. It has been found that optimising lens design for radial spot size, while allowing the tangential spot size to be substantially unconstrained, results in a superior design for light scattering applications, where the scattering angle is more important than the azimuthal direction of scattering.

According to a seventh aspect of the invention, there is provided a lens element with an open region along the axis of the lens element, for use with the apparatus of any other aspect of the invention.

According to an eighth aspect of the invention, there is provided a particle characterisation apparatus comprising: a light source; a sample cell; an optical group; and a detector; wherein the light source is operable to illuminate a sample within the sample cell with a light beam along a light beam axis, the light beam producing scattered light by interactions with the sample; wherein the optical group is configured to collect and focus scattered light on the detector and comprises at least one lens element; wherein a lens element of the optical group is substantially sector shaped when viewed along the lens axis.

The use of a sector shaped lens element substantially reduces the cost and weight of the system, without penalty in performance. Where an apparatus includes a detector configured to detect P-polarised light, it will be understood that a sector shaped lens can readily be used to direct light to the detector without loss of performance. A plurality of sector shaped lenses may be produced from a single circular lens blank after is has been ground and polished, by cutting it along radii (or diameters) thereby reducing the cost of each lens element.

It is not essential that a sector shaped lens comprise an open region for the light beam to pass through, because the sector shaped lens may be slightly offset from the light beam axis, or the sector shaped lens may be positioned behind a beam stop that stops the optical light beam.

It will be appreciated that a sector shaped lens element that is configured to allow the illuminating light beam to pass by can readily be created by forming a hole in a circular lens blank before the lens blank is cut into sector shaped lens elements.

The optical group may be configured to collect and focus, at the detector, light scattered over an azimuthal range of less than 90 degrees.

The apparatus may comprise a further detector, wherein the further detector is arranged to detect light scattered over a further azimuthal range that excludes the azimuthal range collected by the optical group.

The detector and/or further detector may be arranged to detect P-polarised scattered light.

The detector may be configured to detect light scattered at a first range of elevation angles, and the further detector is configured to detect light scattered at a second range of elevation angles, wherein the first range is broader than the second range, and wherein the first range includes a higher maximum scattering angle than the second range.

The segment shaped lens element may be formed from a circular lens element by cutting the circular lens element along a first and second radius.

The lens element may comprise an aspheric surface.

The lens element may be arranged with its axis substantially coincident with the light beam axis.

The optical group may be configured to direct and focus forward scattered light at angles of at least 35 degrees to the light beam axis, and preferably at angles of at least 50 degrees to the light beam axis.

The optical group may comprise a plurality of lens elements.

The optical group may be configured to produce an image spot on the detector with a radial extent that is less than half of a tangential extent of the image spot.

According to an ninth aspect of the invention, there is provided a substantially sector shaped lens element, for use with the apparatus of any other aspect of the invention.

According to a tenth aspect of the invention, there is provided a particle characterisation apparatus comprising: a light source; a sample cell; a first detector, an optical group and a second detector; wherein the light source is operable to illuminate a sample within the sample cell with a light beam along a light beam axis, the light beam producing scattered light by interactions with the sample; wherein the first detector is arranged to detect forward scattered light scattered at a first range of scattering angles onto the first detector, and the second detector is arranged to detect forward scattered light scattered at a second range of scattering angles that is collected and focussed onto the second detector by the optical group, wherein the second range of scattering angles is different from the first range, and wherein the plane of each of the first detector and second detector is substantially normal to the light beam axis.

This arrangement allows detection of a broad range of scattering angles using only two relatively compact planar detectors. The alignment of the detectors is relatively straightforward, because each of the detectors must be substantially normal to the axis of the illuminating light beam. Furthermore, because each of the detectors is normal to the light beam, the collecting lens (or lenses) may be positioned and oriented with their axis substantially co-incident with the axis of the illuminating light beam. The relatively continuous light field at the detectors means that this arrangement is relatively insensitive to misalignment of the lenses or detectors.

In prior art arrangements with a plurality of separate detectors, each covering a relatively narrow range of scattering angles is more problematic to align, because misalignment can result in the scattered light missing the detector at the edges. Consequently, oversized detectors tend to be used, which results in increased parasitic capacitance and increased noise. Furthermore, the reduced number of detectors and lens elements makes this arrangement more straightforward to electrically connect and to assemble.

The optical group may comprise at least one lens element having a lens axis that is substantially co-incident with the light beam axis.

The optical group may comprise at least one lens element and each of the at least one lens element may have a lens element axis that is substantially co-incident with the light beam axis.

The second range of angles may include a larger maximum scattering angle than the first range of angles.

The first and second range of angles may comprise mutually exclusive azimuthal angular ranges.

The light source may be configured to produce plane polarised light, and the azimuthal angular range of each of the first and second range of angles is substantially centred on the polarisation plane, so that each of the first and second detector are arranged to detect p-polarised scattered light.

The apparatus may further comprise a diverging lens is positioned between the first detector and the sample cell.

The first detector may be positioned closer to the sample cell than the second detector.

The optical group may comprise at least one lens that is substantially sector shaped.

The optical group may comprise at least one lens that is circular.

The optical group may comprise at least one lens element comprising a open region along the axis of the lens element, wherein the lens element is arranged to allow the light beam to pass through the open region thereof.

The optical group may be configured to provide a focussed spot size on the second detector that is at least twice as large in tangential extent as in radial extent.

The first detector may be arranged to detect light scattered over a first azimuthal range, and the second detector may be arranged to detect light scattered over a second azimuthal range, wherein the first azimuthal range excludes the second azimuthal range.

The light source may be configured to produce the light beam with plane polarisation, wherein the first detector and/or second detector is arranged to detect P-polarised scattered light.

The optical group may comprise a lens element that comprises an aspheric surface.

The optical group may be configured to direct and focus forward scattered light at angles of: at least 35 degrees to the light beam axis, or at least 50 degrees to the light beam axis; at the second detector.

The apparatus may further comprise a third detector for detecting back scattered light from the sample cell.

According to another aspect of the invention, there is provided a particle characterisation apparatus comprising: a light source; a sample cell; and a detector; wherein the light source is operable to illuminate a sample within the sample cell with a light beam along a light beam axis, the light beam axis passing through a first wall of the sample cell, through the sample, and then through a second wall of the sample cell, thereby producing scattered light by interactions with the sample; wherein the detector is configured to detect scattered light leaving the sample cell; and wherein the narrow beam has a maximum 1/e² width that is less than half the distance across the interior of the sample cell along the light beam axis.

In this configuration the light beam may be narrow enough to encompass only one, or a few large particles at a time, and the light scattered therefrom is therefore preferably gathered over a broad angular range (rather than a relatively narrow annulus for collecting P-polarised scattered light). The detector for each range of scattering angle may comprise an annulus with a circumferential extent of greater than 180 degrees.

According to another aspect of the invention, there is provided a particle characterisation apparatus comprising: a light source; a sample cell; and a detector; wherein the light source is operable to illuminate a sample within the sample cell with a light beam, thereby producing scattered light by interactions with the sample; wherein the detector is configured to detect scattered light leaving the sample cell; and further comprising a plurality of sample holders for containing a plurality of samples, the sample holders being moveable within the sample cell to position each sample within the sample cell for illumination.

According to another aspect of the invention, there is provided a particle characterisation apparatus comprising: a light source; and a sample cell; wherein the light source is operable to illuminate a sample within the sample cell with a light beam along a light beam axis, the light beam axis passing through a first wall of the sample cell, through the sample, and then through a second wall of the sample cell, thereby producing scattered light by interactions with the sample; and wherein the apparatus comprises a first optical group configured to direct the light beam into the sample, and a second optical group configured to collect and focus forward scattered light at a first planar detector, the forward scattered light comprising light scattered by interactions with the sample at a range of scattering angles and passing through the second wall; wherein the second optical group is configured to direct back scattered light to be substantially normally incident with the first planar detector.

According to another aspect of the invention, there is provided a particle characterisation apparatus comprising: a light source; and a sample cell; wherein the light source is operable to illuminate a sample within the sample cell with a light beam along a light beam axis, the light beam axis passing through a first wall of the sample cell, through the sample, and then through a second wall of the sample cell, thereby producing scattered light by interactions with the sample; and wherein the apparatus comprises a first optical group configured to direct the light beam into the sample, and a second optical group configured to aggregate forward scattered light at a first planar detector, the forward scattered light comprising light scattered by interactions with the sample at a range of scattering angles and passing through the second wall; wherein the first detector is disposed adjacent to and parallel with a planar surface of the second optical group.

The apparatus may comprise a second detector configured to detect back scattered light collected by the first optical group. The second detector may be disposed adjacent to and parallel with a planar surface of the first optical group.

According to another aspect of the invention, there is provided a particle characterisation apparatus comprising: a light source; and a sample cell; wherein the light source is operable to illuminate a sample within the sample cell with a light beam along a light beam axis, the light beam axis passing through a first wall of the sample cell, through the sample, and then through a second wall of the sample cell, thereby producing scattered light by interactions with the sample; and wherein the apparatus comprises a first optical group configured to direct the light beam into the sample, and a second optical group configured to aggregate forward scattered light at a first planar detector, the forward scattered light comprising light scattered by interactions with the sample at a range of scattering angles and passing through the second wall; wherein the first detector is disposed adjacent to and parallel with a planar surface of the second optical group.

According to another aspect of the invention, there is provided a method of designing an optical arrangement for collecting and focussing scattered light on a detector in a particle characterisation apparatus, comprising minimising a radial spot size at the detector, without constraining a tangential spot size at the detector.

According to another aspect of the invention, there is provided a particle characterisation apparatus comprising: a light source; a sample cell; a collecting lens; and a detector; wherein the light source is operable to illuminate a sample within the sample cell with a light beam along a light beam axis, the light beam producing scattered light by interactions with the sample; wherein the collecting lens is configured to collect and focus forward scattered light scattered onto the detector such that the radial spot size detector is at least twice the tangential spot size at the detector.

The applicant has found that optimising lens design with the tangential spot size unconstrained results in highly compact designs with improved performance, compared with designs produced by the more conventional process of optimising for minimum spot size in both radial and tangential extent.

Each aspect of the invention can be advantageously combined with each other aspect of the invention. Each optional feature of each aspect can similarly be advantageously applied to each other aspect of the invention.

The invention will now be described, by way of example, with reference to the following drawings, in which:
**Figure 1** is a schematic of a prior art particle characterisation apparatus;
**Figure 2** is a schematic showing a light beam path from a light source through a sample cell, for an apparatus according to a first embodiment of the invention;
**Figure 3** is a schematic of a light source, sample cell and collection optics for an apparatus according to a first embodiment of the invention;
**Figure 4** is ray diagram showing a light beam, and scattered light from the sample for an apparatus according to a second embodiment of the invention;
**Figure 5** is a schematic of a light beam path through a sample cell for an apparatus according to a third embodiment of the invention in which the light source has a relatively small numerical aperture;
**Figure 6** is a schematic of a light beam path through a sample cell for an apparatus according to a fourth embodiment of the invention in which a single mirror is used to fold the optical path from the light source to the sample cell;
**Figure 7** is a graph comparing signal intensity for a prior art apparatus with an apparatus according to an embodiment of the invention;
**Figure 8** is a graph comparing collection efficiency for a prior art apparatus with an apparatus according to the first embodiment of the invention;
**Figure 9** is a ray diagram of part of a fifth embodiment, showing a sample cell illuminated by a first and second light source;
**Figure 10** is a graph comparing an angle of exitance at the external surface with respect to an angle of scatter for a prior art sample cell with that for a sample cell according to the first embodiment of the invention;
**Figure 11** is a ray diagram showing how a collimated light beam is internally reflected and totally internally reflected from an air bubble in water;
**Figure 12** is a graph showing the relationship between the intensity of scattered light and the scattering angle for a 50µm glass bead and a 50µm bubble;
**Figure 13** is a schematic of an apparatus according to a sixth embodiment of the invention, in which a symmetric first and second optical group are employed to direct forward and backscattered light from a broad range of scattering angles to a first and second planar detector arranged to detect forward scattered light and backscattered light respectively;
**Figure 14** is a ray diagram showing how forward scattered light is directed by the second optical group onto the first detector, according to the sixth embodiment;
**Figure 15** is graph comparing collection efficiency with respect to scattering angle for: i) a prior art apparatus; ii) an apparatus according to Figure 3; and iii) an apparatus according to Figure 13;
**Figure 16** is a schematic of an apparatus according to a seventh embodiment of the invention, which is a compact configuration that is similar to that of Figure 13, but which is arranged to focus the light beam through the sample to a narrow beam;
**Figure 17** is a ray diagram showing how forward scattered light is directed by the second optical group onto the first detector, for the apparatus according to Figure 15;
**Figure 18** is a schematic of a plurality of sample holders for transferring a plurality of samples into and out of the sample cell;
**Figure 19** is a ray diagram showing a sample cell according to the first embodiment being illuminated along a plurality of optical paths by a plurality of separate light beams, the different light beams being suitable for carrying out a number of different optical analyses;
**Figure 20** is a ray diagram showing four overlapping light beams illuminating a sample cell according to a first embodiment, so as to perform a plurality of different measurement techniques;
**Figure 21** is a view along a light beam axis of a first and second detector and an associated collecting lens element;
**Figure 22** is a ray diagram of a particle characterisation apparatus according to an eighth embodiment of the invention;
**Figure 23** is a ray diagram of a particle characterisation apparatus according to a ninth embodiment of the invention;
**Figure 24** is a ray diagram of a particle characterisation apparatus according to an tenth embodiment of the invention;
**Figure 25** is a ray diagram of a particle characterisation apparatus according to a eleventh embodiment of the invention;
**Figure 26** is a ray diagram of a particle characterisation apparatus according to a twelfth embodiment of the invention;
**Figure 27** is a ray diagram showing rays converging on a detector in the twelfth embodiment of the invention;
**Figure 28** is a ray diagram showing the second optical path of the twelfth embodiment of the invention;
**Figure 29** is a schematic of segment shaped lenses, showing how a circular lens can be cut to form a plurality of segment shaped lenses; and

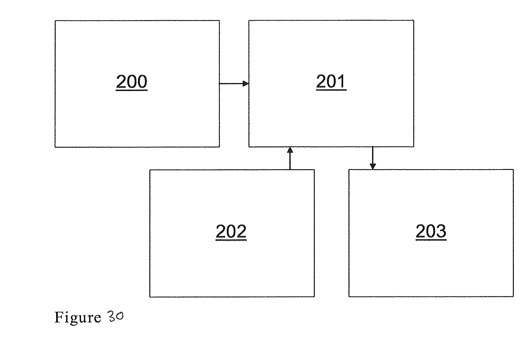

**Figure 30** is a block diagram illustrating a system for bubble detection according to an embodiment of the invention.

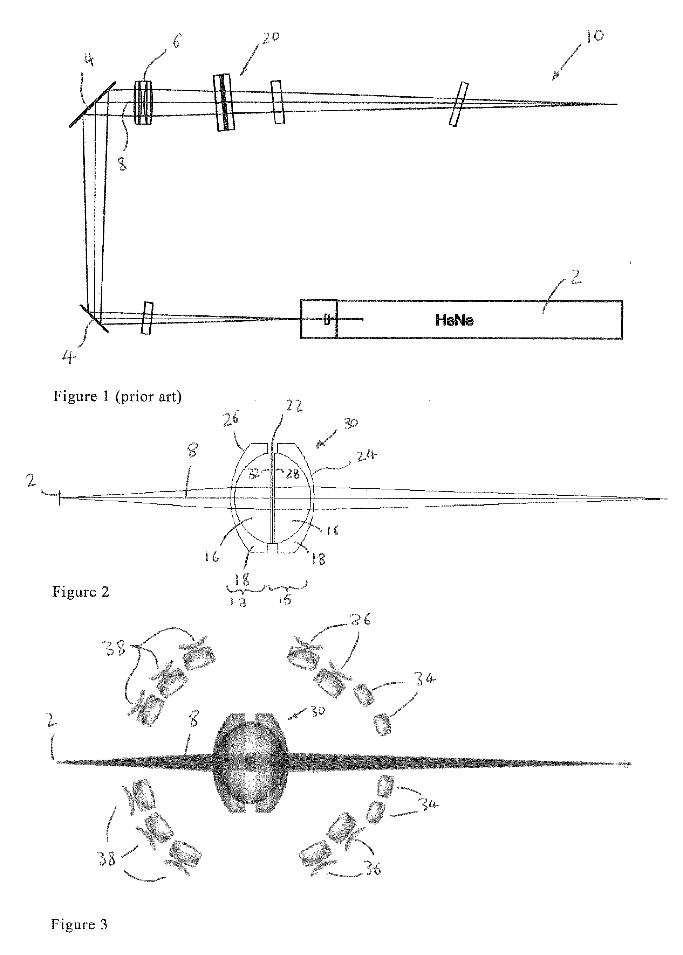

Referring to Figure 1, a prior art apparatus 10 for particle characterisation is shown, comprising a light source 2 for illuminating a sample cell 20 with a light beam 8. The apparatus 10 further comprises a plurality of detectors (not shown) for detecting light scattered from a sample inside the sample cell 20. The light source 2 is a Helium Neon laser, which is relatively large. A first mirror 4 and second mirror 4 are used to fold the optical path of the light beam 8 through two 90 degree bends so that the light source 2 can be accommodated below the optical path of the light beam 8 through the sample. This provides for a relatively compact apparatus, but can lead to indirect heating of the sample by the light source, for example by convective heat transfer. A triplet lens 6 is provided between the second mirror 4 and the sample cell 20 to provide the necessary beam quality through the sample. The light beam converges through the sample.

Figure 2 shows a sample cell 30 according to an embodiment of the invention, under illumination from a light source 2. The sample cell 30 houses a sample 22, and comprises a first wall 13 through which the light beam illuminates the sample, and a second wall 15 from which the light beam 8 exits the sample, absent any scattering in the sample.

The first wall 13 comprises a convex external surface 26 and an opposing planar internal surface 32. The difference in curvature between the opposing internal and external surface of the first wall 13 mean that it is configured to act as a lens element. The first wall 13 and second wall 15 of the sample cell 30 are substantially symmetric about the centre of the sample 22. The second wall 15 similarly comprises a convex external surface 24 and an opposing planar internal surface 28. The planar internal surfaces 32, 28 of the first and second wall are adjacent and substantially parallel and define a flow channel through which a dispersant carrying particles can flow. The sample cell 30 can be disassembled for cleaning of the internal surfaces 32, 28 of the first and second wall 13, 15. The first wall 13 is separable from the second wall 15.

The first and second wall of the sample cell 13, 15 each comprise a doublet lens. The first wall 13 and the second wall 15 each respectively comprise a meniscus first lens element 16 bonded to a plano-convex second lens element 18. The first lens element 16 of each of the first and second wall 13, 15 respectively comprise the respective external surface 26, 24, and the second lens element 18 of the first and second wall respectively comprise the planar internal surface 32, 28. This doublet arrangement reduces spherical aberration, which can become problematic if the optical power of the sample cell is sufficiently high.

The curvature of the external surface 26 of the first wall 13 allows a light source 2 with a low numerical aperture to be used, and in this embodiment the light source 2 is a laser diode. Laser diode lasers are relatively cheap, and can provide high power in a compact volume. Furthermore, the triplet lens that was necessary in the prior art arrangement of Figure 1 between the light source and the sample cell has been eliminated, with the optical power now provided by the first wall of the sample cell. The geometry of the flow channel through the sample cell 30 is unchanged. Eliminating lenses that were previously between the light source and the sample cell reduces scatter from optical surfaces by reducing the number of optical surfaces in the apparatus, thereby reducing optical noise. The improved collection efficiency that is possible according to some embodiments allows a smaller light source to be used, which can be packaged to avoid indirect heating of the sample by the light source (for example by convection). This reduces the creation of bubbles in the sample (when the sample comprises a water dispersant) due to outgassing, reduces the time to warm the sample to equilibrium (so as to eliminate thermal gradients etc).

In prior art devices (such as that shown in Figure 1) the beam tends to be convergent through the cell. The sample thickness places a blur on the transposition between the scattering angle to the position of the detector, which can become significant where the dispersant is air. In such cases the sample thickness may be about 10mm. The arrangement of the first embodiment has an equal distribution of optical power on either side of the sample 22, resulting in a light beam through the sample that is well collimated (parallel, or near-parallel). This Fourier configuration leads to a unique transposition between the scattering angle and a detector position.

The second wall 15 is configured to allow light scattered from the sample at angles of 0 to 80 degrees to the incident light beam 8 to escape from the external surface 24 of second wall 15 of the sample cell 30 without total internal reflection at the external surface 24, when the sample 22 comprises particles in a water dispersant.

In Figure 3, the arrangement of Figure 2 is again shown, with a plurality of optical collectors 34, 36, 38 for directing light scattered by the sample onto detectors (not shown). Forward scattered light, which leaves the optical cell 30 via the second wall 15 is collected by two different types of collector 34, 36. For low scattering angles, a plurality of single component lens collectors 34 are used, comprising a bonded doublet. For scattering angles or more than around 45 degrees, and for back scattered light (in which the scattering angle is greater than 90 degrees), two component collectors 36, 38 are respectively used, comprising a bonded doublet and a further plano-convex lens. A plurality of the collectors 36 and 38 is provided.

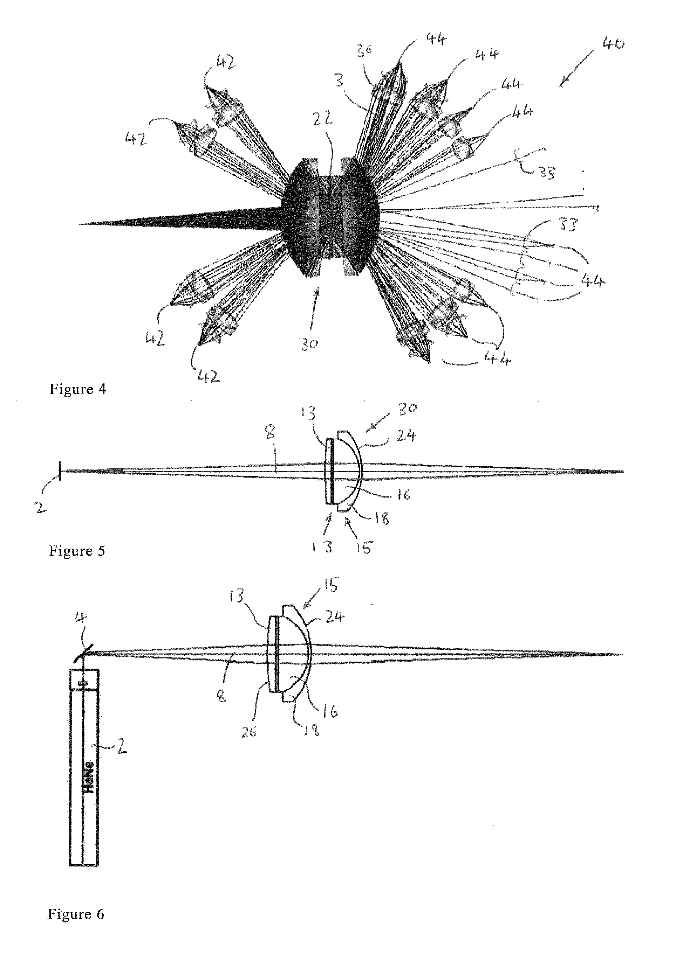

In Figure 4, shows an alternative arrangement of optical collectors 22, 34, 36, 38, and with associated detectors 44, 42 for detecting forward and backward scattered light respectively. The embodiment of Figure 4 differs from that of Figure 3, in that for low angles of scattering of below about 25 degrees, single element collector lenses 33 are used.

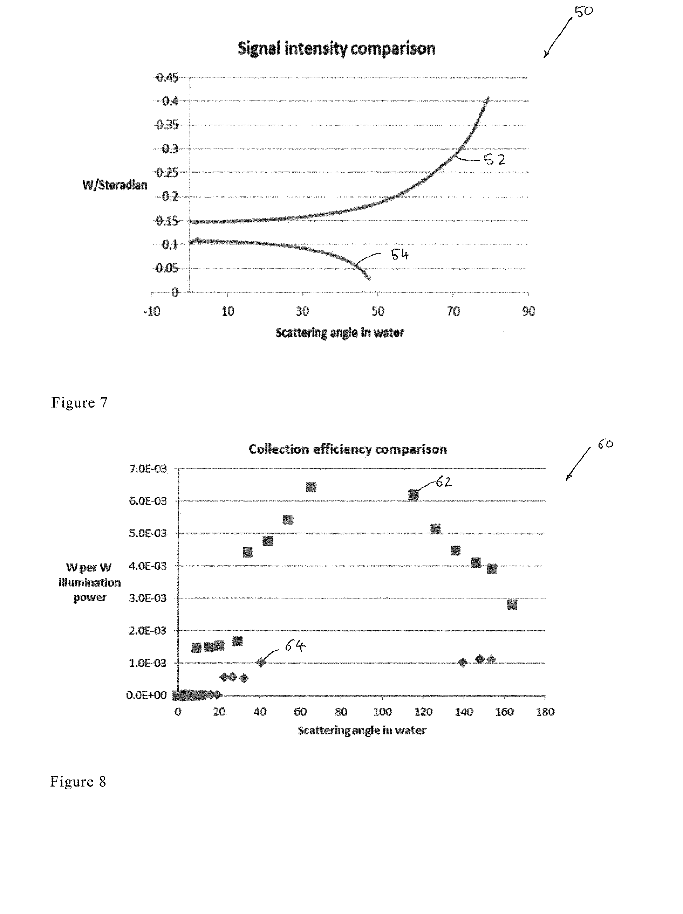

Figure 7 shows a graph 50 of the light intensity in Watts/steradian over a range of scattering angles in a water dispersant from 0 to 90 degrees. A line 52 shows the intensity according to the first embodiment, and a line 54 shows intensity according to the prior art shown in Figure 1. Both lines are independent of any collection optics. The intensity of light scattered according to the prior art is generally lower than that according to the first embodiment. In the prior art sample cell, light scattered at angles above the critical angle of 48.6 degrees (for water/air) is totally internally reflected at the external surface of the sample cell. By contrast, the sample cell of the first embodiment has an increasing intensity with scattering angle. The curvature of the external surface of the second wall prevents the reduction of the signal that takes place in the prior art arrangement, in which the light scattered at angles of 0 to 48.6 degrees is spread out over the range of 0 to 90 degrees. Furthermore, in prior art systems the light scattered at angles of more than 48.6 degrees is totally internally reflected and contributes to optical noise. The totally internally reflected light will eventually leave the sample cell as a diffuse haze that will contaminate the rest of the signal.

The increased intensity of scattered light according to embodiments of the invention enables a lower power light source to be used. A lower powered light source is generally smaller, which reduces the overall size of the instrument. This is particularly applicable to systems like the arrangement of Figure 1, in which a folded optical path is necessary in order to accommodate a relatively large HeNe laser in a relatively compact instrument. The use of a sample cell with comprising a second wall with a curved external surface would allow a HeNe light source of lower power to achieve similar performance, which could subsequently be accommodated with one or no mirrors.

Figure 5 shows an embodiment in which the light source comprises a spatially filtered HeNe laser with a relatively low launch numerical aperture. In this embodiment, a relatively low optical power is sufficient to provide the necessary beam quality within the sample 22, and the external surface 26 of first wall 13 of the optical cell 30 accordingly has a larger radius of curvature than the external surface 24 of the second wall 15. The lower optical power of the first wall 13 means that spherical aberration is less critical, and a single plano-convex lens is adequate. The second wall 15 of the sample cell 30 again comprises a doublet lens with a higher optical power than the first wall 13, so as to compensate for refraction at the sample cell/air interface when the dispersant comprises water.

Figure 6 shows a similar embodiment to that of Figure 5, but additionally comprising a mirror 4 with a surface at 45 degrees to the beam from the light source 2. The light source 2 therefore launches light at 90 degrees to the axis of the beam through the sample cell, which may allow a more compact design.

Figure 8 is a graph 60 comparing the collection efficiency, in Watts per Watt of illumination power at a range of scattering angles, for the first embodiment, as shown in Figure 3, and a prior art arrangement based on Figure 1. The graph includes scattering angles over the full range of 0 to 180 degrees, with a series of points 62 for the embodiment of Figure 3 and a series of points 64 for the prior art arrangement. The collection efficiency for the embodiment of Figure 3 is improved at every angle, and the range of angles previously precluded by total internal reflection in the prior art arrangement have a very high collection efficiency in the embodiment of Figure 3 (of at least 0.004).

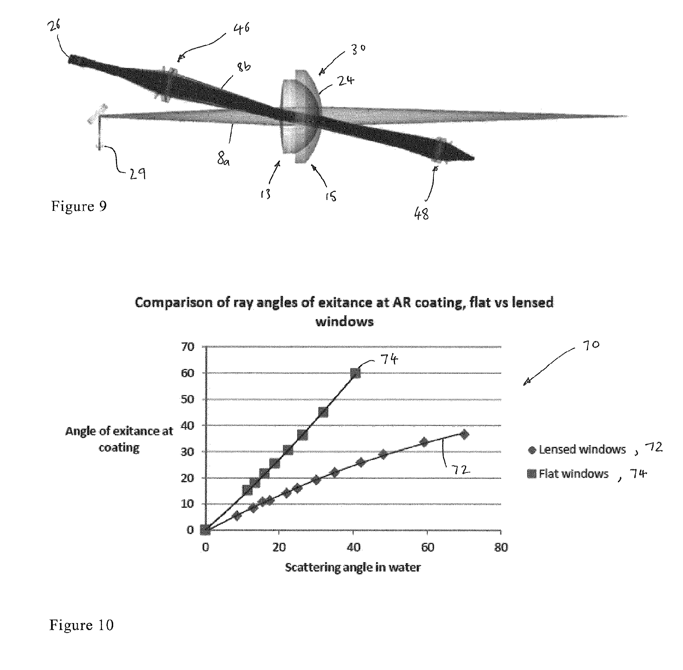

Figure 9 shows an embodiment comprising a first light source 2a and a second light source 2b. The first light source 2a comprises a red laser, and the second light source comprises a blue monochromatic light source, such as an LED. The refractive power resulting from the curved external surface 24 of the second wall 15 of the sample cell 30 allows for more intense illumination of the sample by the second light source 2b. The diameter of the illuminated area in the cell is fixed. To increase the amount of light within the illuminated area when using the second light source 2b, the range of angles from which the area is illuminated must be increased. This tends to cause the beam 8b to diverge away from the cell, which would consequently require larger collection optics (to capture the diverging beam). Larger collection optics would be difficult to accommodate while maintaining sufficient angular resolution in detection and a compact instrument.

The refractive power of the second wall 15 of the sample cell 30 reduces the divergence of light leaving the sample cell, helping to keep beam diameters leaving the sample cell low. Analyses comparing achievable illumination intensities using a blue LED as a second light source 2b for prior art sample cells and using a sample cell comprising a second wall with a curved external surface has shown that the intensity of illumination can be increased by a factor of around 2.7 using a sample cell according to an embodiment.

A further problem which is addressed by a sample cell comprising a second wall with a curved external surface is that of crosstalk due to reflection from the external surface of the second wall. Some of the forward scattered light reflects from the interface at the external surface of the second wall. This external surface may be coated with an anti-reflective (AR) coating in order to reduce such reflections. Often, the reflectivity of such AR coatings increases with the angle of exitance.

Figure 10 is a graph 70 comparing the angle of exitance over a range of scattering angles in water between a prior art sample cell of Figure 1 (with flat windows) and a sample cell as shown in Figure 2. A line 72 shows the angle of exitance for the embodiment of Figure 2, and a line 74 shows the angle of exitance for the prior art sample cell of Figure 1. The angle of exitance is lower for the sample cell according to the embodiment of Figure 2 across the full range of scattering angles. This has the effect of reducing reflections from the external surface of the second wall, thereby reducing crosstalk. Crosstalk tends to reduce the signal to noise ratio.

A sample cell according to an embodiment may be configured to allow light scattered from the sample at relatively high scattering angles to escape from the external surface of the second wall without total internal reflection, when the sample comprises particles in a water dispersant. This enables scattering from bubbles to be differentiated from scattering by particles.

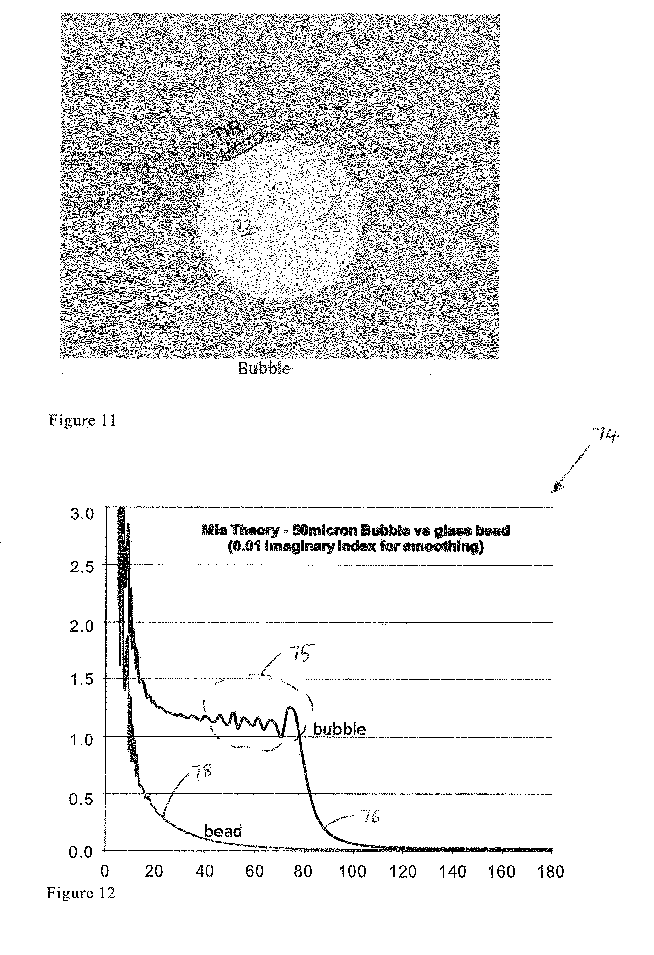

Bubbles scatter light in many directions by internal reflection. Characterisation of low concentrations of relatively large particles requires that bubbles of a similar size can be differentiated from the particles. Bubbles, in contrast to particles of a similar size, scatter light strongly at high angles, due to total internal reflection at the water/air interface of the bubble. This is illustrated in Figure 11, which shows a collimated light beam 8, incident on a bubble 72. Totally internally reflected light is indicated by TIR.

Figure 12 is a graph 74 comparing the scattering intensity over a range of angles for a bubble 76 and a glass bead 78. The bubble and bead are both 50 µm in diameter. The shape of the scattering curve of the bubble 76 can be differentiated from that of the bead 78 by the strong reflections at angles between 45 and 80 degrees. Light scattered at these angles tends to be lost due to total internal reflection in prior art instruments, but a sample cell comprising a wall with a curved external surface allows light scattered at this range to escape the sample cell and be detected. The light scattered at high angles that characterises scattering from bubbles can be used to differentiate bubbles from particles dispersed in the sample.

For example, there is a marked difference in the ratio of forward scattered light at scattering angles in the range of around 30° to around 80° to back scattered light. One way of distinguishing light scattered by bubbles from light scattered from particles is therefore to determine a ratio of forward scattered light at angles of at least 35° and back scattered light. If the ratio is above a threshold value, the scattered light can be identified as being from bubbles.

Large particles and bubbles can be measured prior to data averaging and analysed separately. This avoids phantom peaks due to bubbles in the large particle size range, and provides cleaner data with less noise for the small sized particles.

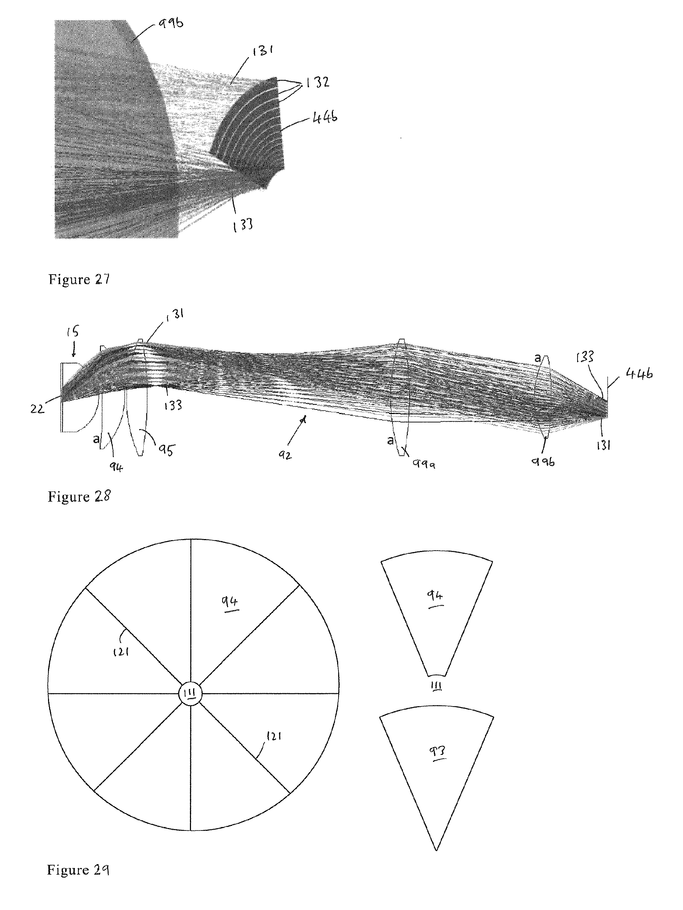

Figure 27 shows a schematic of an instrument configured to distinguish bubbles from particles in a sample. Apparatus 200 is provided, comprising a light source, sample cell and detector, for detecting light scattered from the sample at angles of at least 35 degrees. The output from the detector of apparatus 200 is received by a processor 201, which processes the data and differentiates bubbles from particles by the strong reflections at high scattering angles from bubbles. The processor 201 may subsequently display the results on the display device 203. The instrument may be controlled by the user, via the processor 201, using a suitable input device (such as a keyboard and mouse.

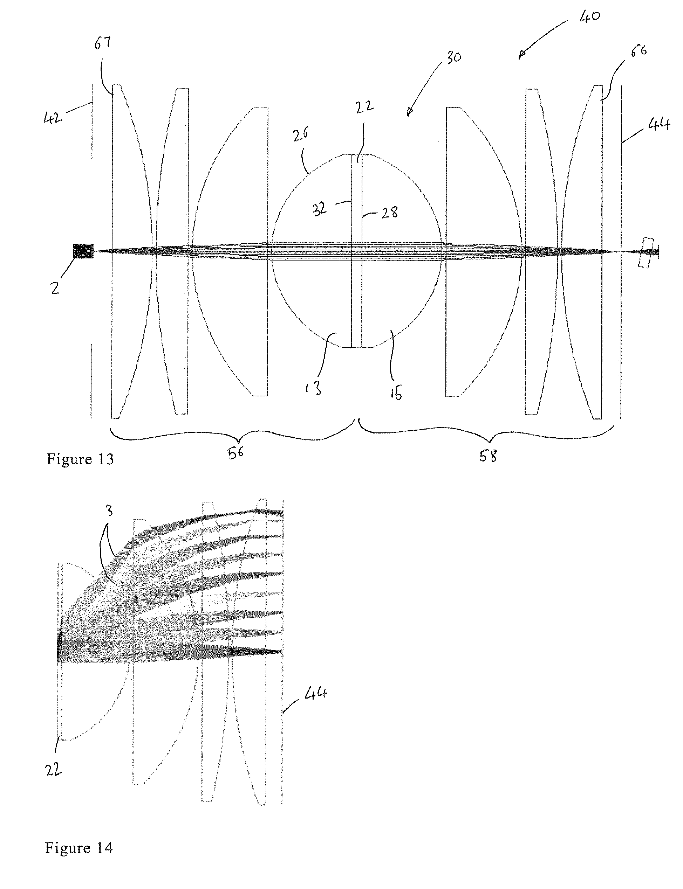

Figure 13 shows an apparatus according to a fifth embodiment of the invention, comprising a light source 2, a first optical group 56, a second optical group 58, a first planar detector 44, and a second planar detector 42. A sample cell 30 is provided, which contains a sample 22 that is between the first and second optical group 56, 58. The sample cell 30 comprises a first wall 13 through which a light beam 8 from the light source 2 illuminates the sample, and a second wall 15 through which the light beam 8 exits the sample, absent any scattering. The first wall 13 and second wall 15 are symmetric about the centre of the sample 22, respectively comprise a planar internal surface 32, 28 and a convex external surface 26, 24. The first wall 13 and second wall 15 are therefore both plano-convex lenses. The first optical group 56 therefore comprises the first wall 12 and the second optical group 58 comprises the second wall 15.

The first and second optical group 56, 58 are symmetrical about the centre of the sample 22, and each consists only of plano-convex lens elements (although other types of lens element may be used, as appropriate). In the present embodiment there are four lens elements in each group 56, 58. The lens element of the first and second group 56, 58 that is furthest from the sample each has a respective planar surface 66, 67 facing the light source 2. The three lens elements of each group that are closer to the sample each have a planar surface that faces the sample 22.

The first planar detector 44 is adjacent with and parallel to the planar surface 66, and thereby detects forward scattered light from the sample. Figure 14 is a ray diagram illustrating the paths of forward scattered light for a range of scattering angles. Light scattered at angles including at least from 5 to 80 degrees are focussed on the planar detector 44, and are incident substantially normal to the plane of the detector 44.

Due to the symmetry of the arrangement, back scattered light (scattered at a range of angles including at least from 100 degrees to 165 degrees) traces similar paths to the second planar detector 42, which is likewise disposed adjacent with and parallel to the planar surface 67.

The first and second planar detectors 44, 42 each comprise a focal plane array having a plurality of light detectors on a single silicon substrate. In other embodiments, a plurality of detectors or detector arrays may be arranged on a planar carrier. A focal plane array has the advantage of reducing assembly and electrical interconnection requirements for the detector, and may also facilitate a reduced pitch between adjacent detectors. A focal plane array detector may therefore be more suitable for compact devices. A focal plane array has the further advantage of eliminating silicon edges in the focussed light field, which could otherwise result in scattering, giving rise to optical noise.

The second detector 42 comprises an opening. The light source 2 may be disposed in the opening, or may arranged behind the second detector 42, so that the light beam 8 passes through the opening. The first and second planar detectors 44, 42 each have an extent corresponding with that of the respective adjacent planar surface 66, 67. The first and second planar detectors 44, 42 are each configured to capture light scattered over the full range of azimuthal angles. This greatly increases the amount of light captured at each scattering angle.

Using a single optical group 56, 58 and a single detector 44, 42 to collect forward scattered light and back scattered light respectively over a broad range of scattering angles simplifies the instrument. Fewer lens groups and lens elements are required, and less alignment of optical elements is required to build the apparatus. The mounting and electrical interconnections for the plurality of collectors and detectors at different locations and angles for embodiments like that of Figure 3 is avoided. Furthermore, the alignment that is required is with respect to the common axis of the light beam 8, rather than with respect to a range of different scattering angles. The arrangement is also very compact, making efficient use of volume.

The light source 2 in this embodiment is a 100mW diode laser, and with a wavelength of 405nm. Such laser diodes are relatively low cost and compact, and provide a high light output.

This arrangement can be readily scaled, depending on performance requirements. Larger designs are more suitable for characterising larger particles. The embodiment of Figure 13 is approximately 150 mm long, and around 100 mm wide, and is suitable for characterising particles up to around 65µm in diameter. The largest optical elements have a radius of around 45mm.

In the embodiment of Figure 13, the light beam 8 through the sample 22 is broader than the width of the sample, and the beam 8 is narrow at the first detector 44. The first detector 44 has an opening through which the beam passes to be absorbed by a non-reflecting heat sink 69. The narrow beam 8 at the first detector results in a narrow opening, which may need to be aligned with a high degree of accuracy.

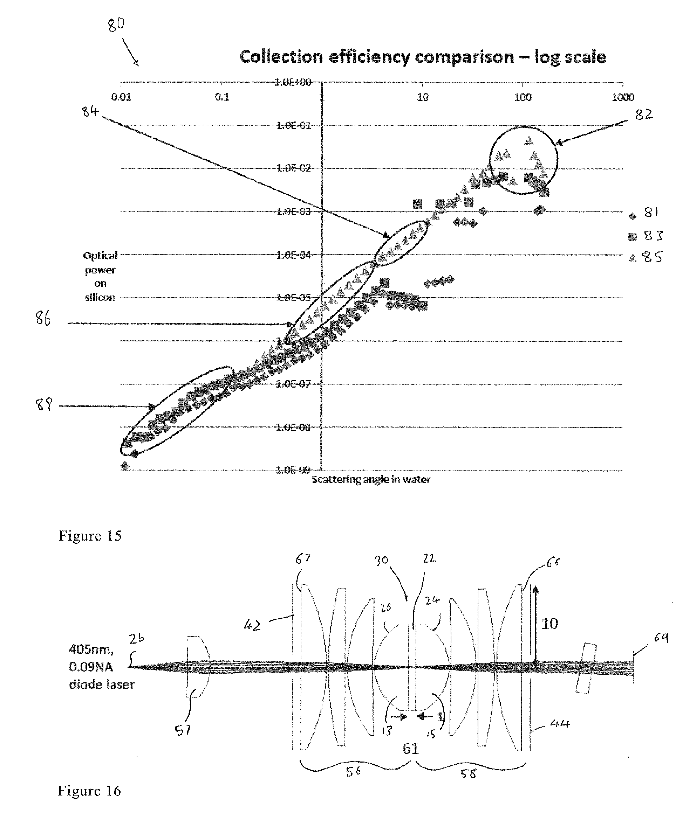

Figure 15 is a graph 80 comparing the collection efficiency for: the embodiment of Figure 13 (data series 85); the embodiment of Figure 3 (data series 83); and a prior art arrangement according to Figure 1 (series 81). At high scattering angles, the performance of the embodiment of Figure 13 is substantially improved over the other arrangements, as indicated by arrow 82. Collection efficiency is improved by factors of 10-100 at scattering angles of 3-10 degrees, and a factor of 5 improvement is achieved down to angles of around 0.5 degrees. At scattering angles below 0.1 degrees, the collection efficiency of the embodiment of Figure 13 is reduced over the other arrangements, as indicated by arrow 88. The minimum detectable scattering angle may be limited by the pitch of the detector elements at the first detector array.

Figure 16 shows a seventh embodiment of the invention, which is similar to the embodiment of Figure 14. In this embodiment, the apparatus is even more compact, with a total length (from light source 2b to heat sink 69) being around 61 mm. The radius of the largest optical element is approximately 10mm, and the width of the sample is around 1mm.

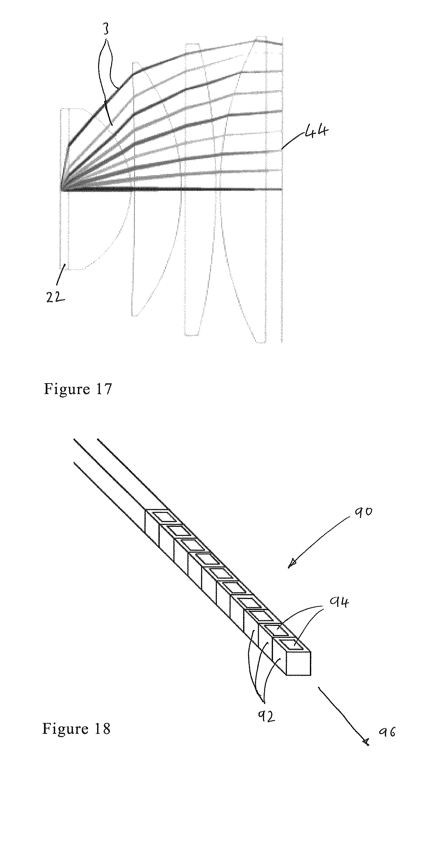

The light source 2b is again a 405nm laser diode, having a numerical aperture of 0.09. In this embodiment the light source 2b is behind the second detector 42. A further converging lens 57 is arranged between the light source 2b and the second detector 42. The light beam 8 in this embodiment is a narrow collimated beam within the sample 22, and is broader where it passes through the first and second detectors 44, 42. The 1/e² beam width in the sample 22 is less than 0.5mm. Similar collection efficiencies are expected for this embodiment as for the fifth embodiment. Figure 17 illustrates the path of forward scattered light through the second optical group 58 of this embodiment. Light scattered at angles of up to 80 degrees in the sample is again collected and focused normally incident to the detector 44.

The 360 degree azimuthal collection of scattered light is particularly relevant to this embodiment because only a small number of particles may be illuminated by the narrow light beam 8 at any specific time. Instead of averaging out the shape information by sampling many different samples, the averaging may be done by the detectors 44, 42. Each detector 42, 44 could be segmented azimuthally to retain shape information.

The detectors 44, 42 in this embodiment are again focal plane arrays of photodiodes. In smaller arrangements like that of Figure 15, it may be appropriate to use a rectangular or square focal plane array, with dimensions large enough to capture the full range of scattered light collected by the respective optical groups 58, 56.

The internal volume of the sample cell 30 is relatively small in this embodiment. Medium sample volumes may be continuously flowed through the sample cell 30 during measurement. For very small volumes, the sample 22 may be introduced via an array of small holders 92, as shown in Figure 18, which may have internal volumes 94 in the micro-litre range. The array of sample holders 92 could be translated into the beam 8 one by one, in the direction indicated by arrow 96, to allow a plurality of samples to be characterised in sequence.

Where such an array of sample holders is used with a sample cell comprising a curved external surface, as in the sixth embodiment, there should not be an air gap between the buckets and the cell window, otherwise total internal reflection may occur at the interface. One way of avoiding an air gap is to arrange a fluid such as water in the sample cell 30 to fill the gap between the sample holders 92 and the internal wall of the sample cell.

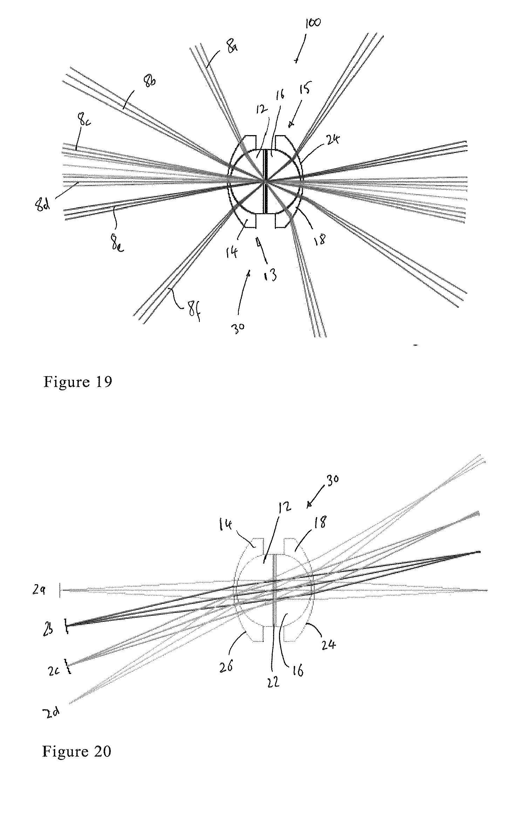

Figure 19 illustrates that in some embodiments, a plurality of light sources may be provided for carrying out different experiments on a sample. This may be particularly applicable to an arrangement in which the sample is small, and/or arrangements which incorporate a plurality of moveable sample holders arranged to allow measurements to be carried out on each small sample. The use of a sample cell with a curved external surface 26, 24 on both walls 13, 15 provides a large range of angles for probe and collection light beams in both elevation and azimuth, as indicated by the nonoverlapping beams 8a , 8b, 8c, 8d, 8e and 8f. There are no corners to be avoided on the external surfaces 26, 24, and the walls 13, 15 can provide useful lens power. Figure 20 illustrates that multiple illumination beams from light sources 2a, 2b, 2c and 2d may overlap at the sample cell.

The type of arrangement shown in Figure 13 enables a compact arrangement in which a single detector be used for detecting light scattered at a large range of angles, and is less sensitive to alignment problems that can cause difficulties in instruments where a plurality of separate detectors and associated lenses are used to respectively detect light scattered at different ranges of scattering angle. There are still some problems with this arrangement though. Firstly, relatively large area detectors 44, 42 are needed to detect forward and backscattered light over a large range of scattering angles. Large area detectors tend to be expensive, and suffer from increased noise due to their increased capacitance. Furthermore, the number of lens elements on the axis of the light source is relatively high. The vast majority of the light will pass straight through the sample without scattering, and the un-scattered light beam will tend to reflect from from each surfaces it enters. Although the proportion of light reflected at each surface is low, the combined effect of the reflected light increases the optical noise in the system.

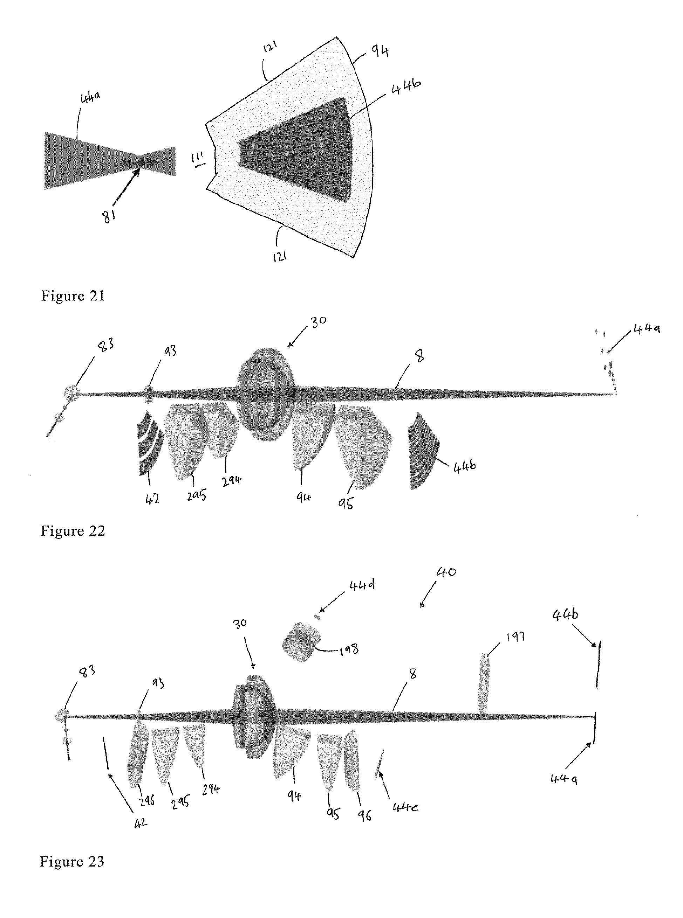

An alternative arrangement that addresses a number of these problems is shown in Figure 21. A collecting lens element 94 is provided to collect and focus light scattered at a range of angles on the detector 44b. The collecting lens element 94 is substantially segment shaped, and is arranged with an open region 111 so that the illuminating light beam can pass through the collecting lens without reflecting therefrom. The axis of lens element 94 may thereby be substantially co-incident with the light beam axis 81 without the light beam reflecting from the lens element 94..

In this example embodiment there is provided another detector 44a. The detector 44a is for detecting light scattered at a first range of angles to the light beam axis 81 and the detector 44b is for detecting light scattered at a second range of angles to the light beam axis 81. The first detector 44a is arranged to detect light scattered at relatively low angles, and the second detector 44b is arranged to detect light scattered at relatively large angles. The first range of angles includes a lower minimum scattering angle than the second range of angles. The second range of angles includes a larger maximum scattering angle than the first range of angles. There is preferably some overlap between the first and second range of angles.

In the example of Figure 21, the light beam 8 is plane polarised, and both of the detectors 44a 44b are arranged to capture P-polarised scattered light. The first detector 44a extends away from the light beam axis 81 in the plane of polarisation in a first direction and a second opposite direction, extending further in the first direction than the second. The second detector 44b is offset from the light beam axis 81 in the second direction, and extends away from the light beam axis 81 in the second direction.

Both detectors are preferably substantially wedge or segment shaped, with the centre of the circumferential extent of each detector substantially co-incident with the plane in which the light is polarised. The plane of both the first and second detectors 44a, 44b is substantially normal to the light beam axis.

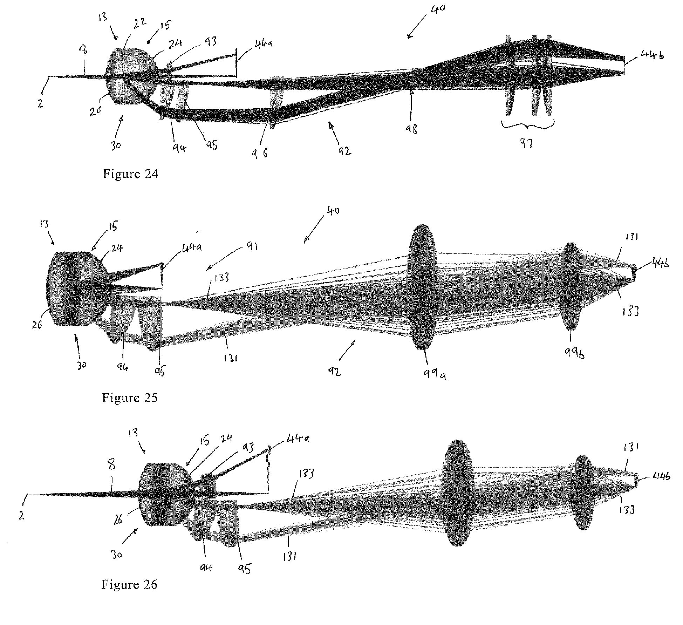

Segment shaped lens elements 94, 93 are more clearly depicted in Figure 26. Figure 26 shows how a circular lens element 120 can be divided into a plurality of segment shaped lens elements 94, 93. The circular lens element 120 may first be shaped and polished, and then cut to produce segment shaped elements 94. The circular lens element 120 is preferably cut along radii or diameters 121.

The lens 93, for instance, may be semi-circular, enabling two such lenses to be produced from a single blank. Alternatively, the angle subtended by each lens element may be smaller, enabling more lens elements to be produced from a single circular blank. The circumferential angle subtended by the lens element 94, 93 may be divisible into 360°, so that multiple lenses may be cut from a circular blank without waste. The angle subtended by the lens element 94, 93 may be selected from the group of: 10°, 12°, 15°, 18°, 20°, 24°, 30°, 36°, 40°, 45°, 60°, 72°, 90° and 180°.

Optionally, a hollow central core 111 may be formed in the circular lens element 120 before it is divided into segments, so that light on the axis of the lens can bypass it without reflecting therefrom. Segment shaped lens element 93 omits this hollow core 111.

Figure 22 shows an example embodiment in which segment shaped lenses 94, 95, 294, 295 are used. In this example, each of the segment shaped lens elements 94, 95, 294, 295 also comprise an open region 111 arranged to allow the light beam 8 to pass through the lens element 94, 95, 294, 295 along the axis thereof without reflection. A light beam 8 illuminates a sample cell 30, via a reflector 83. A diverging lens 93 is provided between the reflector 83 and the sample cell 30, to increase the area illuminated within the sample cell 30 by the light beam 8.

The sample cell 30 is according to an embodiment of the invention, having a first and second wall that have respective convex external surfaces. The first wall of the sample cell 30 is arranged to collimate the light beam 8 in the sample. The second wall of the sample cell 30 is arranged to collect and focus forward light scattered at a first range of scattering angles onto a first detector 44a. The first range of scattering angles covers a low range of scattering angles, for example from 0.01° to 20°.

A pair of lens elements 94, 95 are arranged to collect and focus forward scattered light at a second range of scattering angles (for example from 15° to 80°) onto a second detector 44b. Each of the lens elements 94, 95 is preferably segment shaped, and is configured with an open region to allow the light beam to pass through the axis of each lens 94, 95 without reflecting therefrom.

A further pair of lens elements 294, 295 are arranged to collect and focus back scattered light at a third range of scattering angles (for example from 110° to 165°) onto a third detector 42. Each of the lens elements 294, 295 is preferably segment shaped, and is configured with an open region to allow the light beam to pass through the axis of each lens 94, 95 without reflecting therefrom.

Each of the detectors 44a, 44b, 44b, is arranged facing normal to the light beam 8, and each of the lens elements 94, 95, 294, 295 is arranged with their axis substantially co-incident with the light beam axis. This arrangement means that it is more straightforward to optically align the components of the apparatus, because they are each referenced to the same datum: that of the light beam axis. This is in contrast to arrangements like that shown in Figure 4, which requires alignment of a large number of lens elements and detectors in positions that are off-axis.

An alternative arrangement is shown in Figure 23, wherein a first, second, third and fourth detector 44a, 44b, 44c, 44d are arranged to detect forward scattered light at various ranges of scattering angle, and a fourth detector 42 is arranged to detect back scattered light. In this arrangement, further cylindrical lenses 197, 96, 296 are used to focus light at detectors 44b, 44c, 42 respectively, so as to reduce the size of these detectors. In this embodiment detectors 44c, 44d and 42 are not substantially normal to the light beam axis. A normal direction from each of these detectors is instead inclined relative to the light beam axis.

The first forward scatter detector 44a is arranged at the focal distance of the second wall of the sample cell 30, to detect light scattered at a first, low range of scattering angles (for instance from 0.013° to 4.5°). The second forward scatter detector 44b is arranged to detect light scattered at a second, higher, range of scattering angles (for instance from 6° to 13°). The cylindrical lens element 197 is positioned between the second wall of the sample cell 30 and the second detector 44b, so as the reduce the size of the second detector.

The third detector 44c is arranged to detect forward scattered light scattered at a third range of scattering angles (for instance 33° to 62°), which is higher than the second angular range. Collecting lens elements 94, 95 are configured similarly to the corresponding lens elements 94, 95 in the embodiment of Figure 22. A further cylindrical lens element 96 is provided between lens element 95 and the third detector 44c, which enables the use of a third 44c detector with a reduced size.

The fourth detector 44d is positioned to detect forward scattered light scattered at angles near to 62° to the light beam axis. A group of conventional circular lens elements 198 are positioned between the fourth detector and the sample cell 30 to collect scattered light and focus it onto the detector 44d.

Lens elements 294, 295, 296 are arranged to collect and focus back scattered light at a range of back scattering angles (for instance at scattering angles of between 140° and 160°) onto the detector 42. A cylindrical lens element 296 is employed between the detector 42 and the other two lens elements 294, 295, to reduce the size of the detector 42. Lens elements 294, 295 are configured similarly to the corresponding elements 294, 295 in the embodiment of Figure 22.

The arrangement of Figure 23 is relatively complicated, and has a gap in detection angles in the range 14° to 32°. A further detector and associated collecting and focussing optic may be provide to address this (not shown).

Figure 24 shows an alternative embodiment, in which a relay lens group 97 is used to extend the optical path, and thereby simplify the collection optics and reduce the total detector area needed for detecting a wide range of scattering angles.

A light source 2 provides a light beam 8 along a light beam axis. A lensed sample cell 30 is provided, having a first wall 13 through which the light beam 8 (from light source 2) illuminates the sample 22 and second wall 15 through which the light beam 8 exits the sample cell 30. The external surface 24, 26 of each of the first and second wall 13, 15 through which the light beam 8 passes are convex. The external surface 26 of the first wall 13 has a large radius of curvature than the external surface 24 of the second wall 15. Both the first and second wall 13, 15 are lenses (for instance, doublet lenses) with a positive optical power, and the second wall or lens 15 has a higher optical power than the first 13. The use of a lensed sample cell 30 is advantageous for the same reasons previously discussed, but it will be appreciated that this is not essential. In some embodiments a flat windowed cell may be used, or a sample cell with a convex external surface on only the first wall 13, or only the second wall 15 may be used.

A split optical path arrangement is used, in which a first optical path 91 is provided for detecting light that is scattered at a first range of angles (for example from 0.1° to 10°), and a second optical path 92 is provided for detecting light that is scattered at a second range of angles (for example from 8° to 80°). The first range of angles preferably comprises a smaller maximum angle than the second range of angles. Preferably there is some overlap in the first and second range of angles, but in some embodiments the second range of angles does not include angles within the first range of angles.

The use of two optical paths allows for improved performance optimisation, by enabling separate optimisation for both small angle and large angle scattering paths. It will be appreciated that these requirements are in tension if a single optical path is used, because designing to accommodate a large scattering angle tends to have a deleterious effect on the minimum resolvable scattering angle. Although two optical paths are preferable, in some embodiments a single optical path may be used, corresponding with either the first optical path or the second optical path.

Both optical paths 91, 92 are configured for collecting and detecting mainly P-polarised scattered light. The incident light is plane polarised, and P-polarised scattered light is therefore scattered in a direction parallel with the polarisation plane. Each optical path may alternatively be configured to detect light over a any azimuthal range (for example over a 360 degree azimuth).

The first optical path 91 comprises a diverging lens 93, which directs light onto the first detector 44a. The first detector 44a is an planar array of photodiodes (e.g. an array of annular photodiodes), and is substantially normal to the axis of the light beam 8. The first detector 44a extends away from the axis of the light beam 8 far enough to detect light scattered at the end of the scattering angle range of the first optical path (for example 10°). The diverging lens increases the angular separation between light scattered at different angles, improving the ability of the instrument to detect and characterise scattering of light at very small angles, thereby improving the ability of the apparatus to characterise relatively large particles. In some embodiments the diverging lens is not used (for example, where characterising larger particles is less emphasised). The first detector 44a may be provided with a hole to allow the un-scattered light beam 8 to pass through the detector array to a light absorbing heat sink.

The second optical path 92 comprises an optical group. The optical group comprises a first group of three lenses 94, 95, 96 and a second relay group of lenses 97, comprising three further lens elements. The lenses 94, 95, 96, 97 of the optical group on the second optical path 92 collect and focus light scattered at a larger range of angles than the first optical path, and at higher angles (for example from 8° to 80°). There is an optical inversion point 98 between the first and second ground of lenses, at which a mirror may optionally be positioned to fold the optical path so as to reduce the length of the apparatus. The scattered light is directed and focussed by the optical group of the second optical path onto the second detector 44b. The second detector 44b is planar, is oriented substantially normal to the axis of the light beam 8, and extends away from the axis of the light beam 8. The lenses 94, 95, 96, 97 of the optical group are configured to map scattering angle at the sample 22 to a location on the second detector array 44b. The distance from the light beam axis on the detector 44b corresponds with the scattering angle, with each scattering angle mapping to a narrow range of distances from the light beam axis.

Each of the lens elements 94-96 are substantially sector shaped when viewed along the axis of the lens element, having a substantially circular edge between two substantially radial straight sides. Although this is advantageous, it will be understood that this is not essential, and arrangements are envisaged in which the lens elements of the second optical path 92 are circular (for instance in an arrangement without the first optical path 91).

Each of the lenses in the embodiment of Figure 24 are spherical lenses, which are relatively low cost.

An open core 111 may be provided, for allowing light to bypass the lens elements 94, 95 without interacting therewith. Lens elements 94 and 95 in the embodiment of Figure 21 preferably have such an open core 111 (although it is not essential). The lens elements 94 and 95 may thereby each be positioned with their axis co-incident with the axis of the light beam 8, so that the un-scattered light beam 8 will pass through the open core 111, without being reflected from the lens 94, 95. This substantially reduces the optical noise that would otherwise result from reflections at the surface of these lenses. A light absorbing heat sink (not shown) is provided to absorb the un-scattered light beam 8.

This design overcomes a number of the problems associated with designs like those of Figure 13. It has relatively compact detectors 44a, 44b, and greatly reduced stray light as a result of reflections of the light beam 8 at the surfaces of the lens elements. Furthermore, each of the detectors 44a 44b are oriented normal to the light beam axis, and each of the lens elements 93-97 are arranged with their respective axis co-incident with the light beam axis, which simplifies alignment and construction. However, the approach of the embodiment of Figure 21 is relatively difficult to miniaturise while still achieving good imaging at the detector, in which light scattered at a single angle results in a small spot (ideally a point) at the detector.

Figure 25 shows an alternative embodiment, in which a number of the lens elements in the optical group in the second optical path comprise aspheric surfaces. The applicant has found that a single aspheric surface enables more compact and/or better performing designs and that two aspheric surfaces are an improvement over one aspheric surface. Three aspheric surfaces are better still than two aspheric surfaces. Three aspheric surfaces have been found by the applicant to provide a good balance of performance and cost/complexity.

In the embodiment of Figure 25 the second optical path 92 has been optimised for minimising the radial extent of an imaged spot on the detector 44b, which leaving the tangential extent unconstrained, thereby allowing optical designs that produce an imaged spot on the detector with a relatively large tangential extent. This is advantageous, because it results in a more compact design than would be the case if the optical design were optimised for both tangential and radial spot size. Although advantageous, this feature is not essential, and it will be understood that a working design can be realised while optimising for minimal spot size in both tangential and radial extent.

A design for the second optical path 92 is also shown in Figure 28, in which the lenses 94, 95 are shown as circular. It will be understood that the optical design is the same, whether these elements 94, 95 are circular or segment shaped. Aspheric surfaces a are clearly shown in Figure 28. The first aspheric surface a is the surface of lens element 94 that faces the sample 22. The second aspheric surface a is the surface of lens element 99a that faces the sample 22. The third aspheric surface a is the surface of the lens element 99b that faces the sample. In other embodiments, different surfaces may be aspheric. This design has been found to result in aspheric surfaces that are reasonably close to spherical, which may be more straightforward to manufacture.

The use of aspheric surfaces and lack of constraint in tangential image spot size both contribute to realising a relatively compact design that performs well at a wide range of scattering angles, and which is less sensitive to misalignment errors than prior art instruments which use a plurality of angled individual detectors to detect light scattered at different angular ranges. The continuous light field, covering a relatively broad range of angles, at each of the first and second detector 44a, 44b means that problems that result from misalignment of collection optics and/or detectors is mitigated. If a misalignment occurs, there is less chance of the light field falling off the edge of the detector with an arrangement where a substantially continuous light field corresponding with a broad range of scattering angles is available at the detector 44b. Furthermore, it is more straightforward to compensate for any misalignment of the sensor element 44a, 44b according to embodiments of the present invention.

Lens elements 94, 95 are again preferably segment shaped, with hollow cores 111 to allow the light beam 8 to bypass them without contributing to stray light by reflecting therefrom. The final two collecting lenses 99a, 99b are circular spherical lenses, which focus the light onto the detector 44b. The second detector 44b is again a planar segment shaped array of detector elements, oriented normal to the axis of the light beam 8 and extending away from the light beam axis. The relatively broad spot size at the second detector 44b in the tangential direction means that each detector element 132 of the second detector 44b may be somewhat larger in azimuthal extent than each detector element of the first detector 44a. This is more clearly shown in Figure 27, which illustrates light scattered at a small range of relatively large angles 131 and light scattered at a small range of relatively small angles 133, each respectively focussed on a different annular detector sub-element 132.

The first optical path 91 in the embodiment of Figure 25 omits the diverging lens 93 that was used in the embodiment of Figure 24, which results in a more compact first detector 44a, and a slight reduction in the size of the largest particles that can be characterised. Omitting the diverging lens 93 may reduce stray light that results from illuminating light beam 8 reflecting from the diverging lens 93, and decreases the number of lens elements which may reduce cost.

Figure 26 shows a similar arrangement to that of Figure 25, but includes a diverging lens 93 in the first optical path 91, resulting in improved performance in characterising larger particles, but requiring a larger first detector 44a. The second optical path 92 in this embodiment is substantially identical to that used in Figure 25.

In each of the embodiments of Figures 24-26, a further detector may be included, to detect backscattered light from the sample 22. The performance of the apparatus in detecting backscattered light may be less critical than for forward scattered light, and a more conventional arrangement for detecting backscattered light, similar to that shown in Figure 4 may be used. Alternatively, an arrangement similar to that of the second optical path 92 for forward scattered light of any of Figures 24-26 may be used for detection of backscattered light.

A further collection lens and a third detector (not shown) may be provided for detecting back scattered light from the sample 22. This arrangement may comprise a detector that is at an angle with respect to the axis of the light beam 8. The back scatter detector may be positioned remote from the axis of the light beam 8. The backscatter detector may be configured to collect only a limited range of scattering angles near to the axis of the light beam so as to minimise cross talk from reflections at the water-lens boundary within the sample cell (when the sample is dispersed in water), because there is little spatial information in the higher back-scattered angles anyway. For very small sized particle characterisation, only a relatively small range of back scattering angles (for example at a range of around 120°-150° to the light beam axis) may be collected in backscatter. The backscatter detector (and any associated lens elements or optics) may be placed away from light reflected from segment shaped lenses, for example at different azimuthal angle.

The skilled person will appreciate that a number of other modifications can be made, without departing from the scope of the invention, as defined by the appended claims.

## Claims

1. A particle characterisation apparatus (40) comprising: a light source (2) ; a sample cell (30); an optical group (56, 58); and a detector (42, 44, 44a, 44b); wherein the light source (30) is operable to illuminate a sample (22) within the sample cell (30) with a light beam (8) along a light beam axis, the light beam (8) producing scattered light by interactions with the sample (22); wherein the optical group (56, 58) is configured to collect and focus scattered light on the detector (42, 44, 44a, 44b) and comprises at least one lens element (94, 95, 96, 97, 99a, 99b); wherein a lens element (94, 95, 96) of the optical group is substantially sector shaped when viewed along the lens axis.

2. The particle characterisation apparatus (40) according to claim 1, wherein the optical group (56, 58) is configured to collect and focus, at the detector (42, 44, 44a, 44b), light scattered over an azimuthal range of less than 90 degrees.

3. The particle characterisation apparatus (40) according to claim 2, comprising a further detector (42, 44b), wherein the further detector (42, 44b) is arranged to detect light scattered over a further azimuthal range that excludes the azimuthal range collected by the optical group (56, 58).

4. The particle characterisation apparatus (40) of claim 1, comprising a further detector (42, 44b), wherein the detector (44, 44a) is configured to detect light scattered at a first range of elevation angles, and the further detector (42, 44b) is configured to detect light scattered at a second range of elevation angles, wherein the first range is broader than the second range, and wherein the first range includes a higher maximum scattering angle than the second range.

5. The particle characterisation apparatus (40) according to claim 3 or 4, wherein the detector (44, 44a) and/or further detector (42, 44b) is arranged to detect P-polarised scattered light.

6. The particle characterisation apparatus (40) of any preceding claim, wherein the sector shaped lens element (94, 95, 96) is formed from a circular lens element by cutting the circular lens element along a first and second radius (121).

7. The particle characterisation apparatus (40) of any preceding claim, wherein a lens element (94, 95, 96) of the optical group, optionally the sector shaped lens element (94, 95, 96), comprises an aspheric surface (a).

8. The particle characterisation apparatus (40) of any preceding claim, wherein the sector shaped lens element (94, 95, 96) is arranged with its axis substantially coincident with the light beam axis.

9. The particle characterisation apparatus (40) of any preceding claim, wherein the optical group (56, 58) is configured to direct and focus forward scattered light at angles of at least 35 degrees to the light beam axis.

10. The particle characterisation apparatus (40) of any preceding claim, wherein the optical group (56, 58) is configured to direct and focus forward scattered light at angles of at least 50 degrees to the light beam axis.

11. The particle characterisation apparatus (40) of any preceding claim, wherein the optical group (56, 58) comprises a plurality of lens elements (94, 95, 96, 97, 99a, 99b).

12. The particle characterisation apparatus (40) of any preceding claim, wherein the optical group (56, 58) is configured to produce an image spot on the detector (42, 44, 44a, 44b) with a radial extent that is less than half of a tangential extent of the image spot.

13. A lens element (94, 95, 96), for use with the apparatus of any preceding claim that is substantially sector shaped when viewed along the axis of the lens element.
